Europäisches Patentamt

European Patent Office

Office européen des brevets

(11) Publication number: **0 211 536**
A2

## (12) EUROPEAN PATENT APPLICATION

(21) Application number: 86305386.4

(51) Int. Cl.⁴: **B60C 27/06**

(22) Date of filing: 14.07.86

(30) Priority: 22.07.85 JP 111086/85 U

(43) Date of publication of application:
25.02.87 Bulletin 87/09

(84) Designated Contracting States:
AT BE CH DE FR GB IT LI LU NL SE

(71) Applicant: **Car Mate Manufacturing Company Limited**
**No. 3 Enokicho Shinjuku-ku**
**Tokyo 162(JP)**

(72) Inventor: **Sakuma, Kiyoshi**
**No. 205 Daini Kiyohagiso 1-12-24**
**Yagiyamahigashi**
**Sendai-City Miyagi-Prefecture 982(JP)**

(74) Representative: **Pacitti, Pierpaolo A.M.E. et al**
**Murgitroyd and Company Mitchell House 333**
**Bath Street**
**Glasgow G2 4ER Scotland(GB)**

(54) Anti-skid device for tyres.

(57) An anti-skid device for tyres having connecting rods (5) fixed to inner portions (2) of a net (1) such that in an ungathered form there are clearances (P) between adjacent connecting members (5), the inner portions (2) of the net (1) being gathered together by inserting between adjacent connecting members (5) hooks of a width (P') that is narrower than the aforementioned clearances (P). The net (1) is bent round the tyre and is fixed on the outer side by connecting outer tyre-fastening portions (8) to a rubber band (9) by using fixing hooks (10).

FIG. I

## Anti-skid Device for Tyres

This invention relates to an anti-skid device for tyres, and more particularly to a non-metallic anti-skid device for tyres.

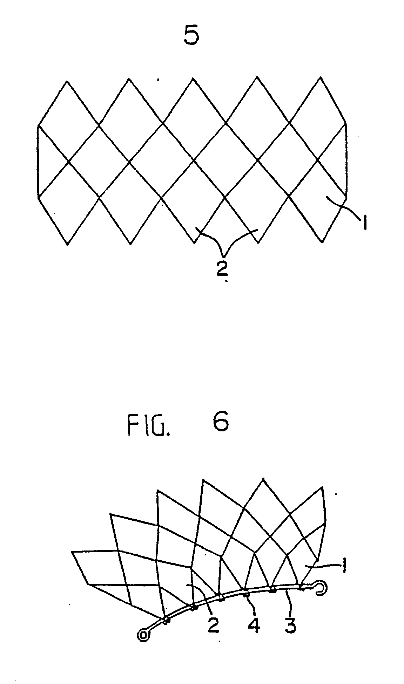

A conventional anti-skid device for tyres is positioned by connecting the inner tyre-fastening portions 2 of a net 1, which is formed flat as shown in Fig. 5, to a fastener rope 3 via metal members 4 as shown in Fig. 6, and bending the net.

However, in order to fix the net 1 of a conventional device to a tyre, a rope is used and metal members attachment of the net to the rope and hooks for joining the ends of the and a rope are required at the inner side of the tyre. This causes the equipment cost to increase, and also the device-fixing operation to become complicated. Moreover, the anti-skid device is limited by necessity to one size.

It is an object of the invention to provide an anti-skid device for tyres, which mitigates these faults.

According to the present invention there is provided an anti-skid device for tyres comprising a plurality of connecting members which are fixed to a corresponding plurality of inner portions of a net such that clearance is left between adjacent connecting members, and a plurality of hook members, each of which is narrower than each of the clearances, the hook members being engaged by adjacent connecting members to thereby gather the inner portions of the net.

Preferably, each connecting member is a rod which is joined at a point along its length to respective inner portions of the net and has loops at either end to engage the hooking member.

Preferably, the width of each hooking member is narrower than the clearance between adjacent connecting members when the net is in an ungathered form.

An embodiment of the present invention will now be described, by way of example, with reference to the accompanying drawings, in which:-

Fig. 1 is a plan view of a net of the anti-skid device for tyres according to the present invention;

Fig. 2 illustrates a hook member according to the present invention;

Fig. 3 illustrates fastening of inner tyre-fastening portions of the net;

Fig. 4 illustrates the fastening of outer tyre-fastening portions of the net;

Fig. 5 is a plan view of a net of a conventional anti-skid device for tyres; and

Fig. 6 illustrates inner tyre-fastening portions of the net of Fig. 5.

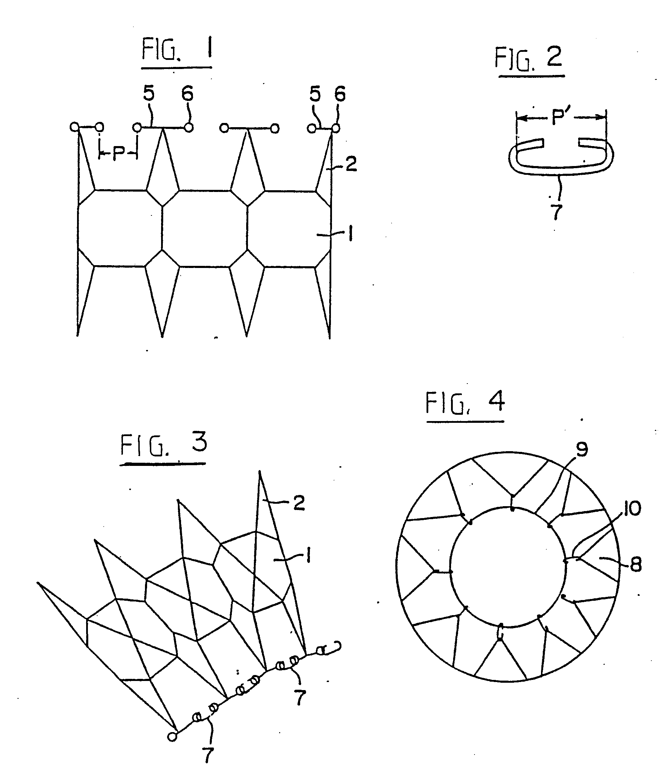

Referring to Figs. 1 to 4, there is provided an anti-skid device for tyres wherein a linear connecting rod 5 is moulded half way along its length to its corresponding inner tyre-fastening portion 2 of a non-metallic net 1, as shown in Fig. 1. Each end of the connecting rod 5 is provided with loops 6, the connecting rods 5 being so arranged that there are clearances P between the loops 6 of adjacent connecting rods 5. A hook 7, which has a width P' smaller than that of the clearance P, is inserted in the loops 6 of adjacent connecting rods 5 to gather the inner portions of the net 1, as shown in Fig. 3.

On the outer side of the tyre, the net 1 is fixed by connecting a plurality of outer tyre-fastening portions 8 to a rubber band 9 by using fixing hooks 10.

In the embodiment of the present invention described above, the distance between the adjacent fastening portions can be varied by just changing the width P' of each hook 7. Therefore, a single type of anti-skid device can be applied to a plurality of types of tyres. This invention is capable of reducing the number of parts.

The embodiment hitherto described is constructed from plastics material, but other embodiments may employ other materials.

Modifications and improvements may be incorporated without departing from the scope of the invention.

## Claims

1. An anti-skid device for tyres, comprising a plurality of connecting members (5) which are fixed to a corresponding plurality of inner portions (2) of a net (1) such that clearance P is left between adjacent connecting members, and a plurality of hook members 7, each of which is narrower than each of the said clearances (P), the hook members 7 engaging adjacent connecting members (5) to thereby gather the inner portions (2) of said net (1).

2. A device as claimed in Claim 1, wherein each connecting member (5) is a rod which is joined at a point along its length to a respective inner portion (2) of the net (1) and has loops (6) at either end to engage the hooking members (7).

3. A device as claimed in Claim I, wherein the width (P') of each hooking member (7) is narrower than the clearance (P) between adjacent connecting members (5) when the net (1) is in an ungathered form.

4. An anti-skid device for tyres comprising a plurality of linear connecting rods (5) each of which is fixed unitarily at its intermediate portion to the relative inner tyre-fastening portion (2) of a tyre-skidding preventing net (1) so that a sufficiently wide clearance (P) is left between the adjacent connecting rods (5) and a plurality of hooks (7), the width of each of which is smaller than that of each of said clearances (P), each of said hooks (7) being engaged at both end portions thereof with the opposed end portions (6) of the adjacent connecting rods (5) to thereby fasten the inner portion (2) of said net (1).

FIG. 1

FIG. 2

FIG. 3

FIG. 4

5

FIG. 6